# EUROPEAN PATENT SPECIFICATION

(11) **EP 1 268 214 B1**
(45) Date of publication and mention of the grant of the patent: **07.06.2006**
(21) Application number: 00920106.2
(22) Date of filing: 04.04.2000
(51) Int. Cl.: B41M 5/00

(54) **INK RECEPTIVE COATING COMPOSITIONS CONTAINING POLY(VINYL ALCOHOL) GRAFTED WITH AMINE FUNCTIONAL GROUPS**
TINTENAUFNEHMENDE ZUSAMMENSETZUNG, DIE POLYVINYLALKOHOL MIT GEPFROPFTEN AMINGRUPPEN ENTHAELT
COMPOSITIONS DE REVETEMENT RECEPTIVES A L'ENCRE RENFERMANT DU POLY(ALCOOL DE VINYLE) AVEC GREFFE DE GROUPES FONCTIONNELS AMINE

(43) Date of publication of application: 02.01.2003
(73) Proprietor: Celanese International Corporation, Dallas, Texas 75234 (US)
(72) Inventor: RABASCO, John, Joseph, Allentown, PA 18104 (US); KLINGENBERG, Eric, Howard, Emmaus, PA 18049 (US); BOYLAN, John, Richard, Bethlehem, PA 18017 (US)
(74) Representative: James, Anthony Christopher W.P.
(86) International application number: PCT/US2000/008917
(87) International publication number: WO 2001/074599

(56) References cited:
- CA-A- 2 221 515
- GB-A- 1 359 692
- US-A- 5 942 335

## Description

### BACKGROUND OF THE INVENTION

Advances in ink jet technology have placed increased demands on recording papers and other recording media. To function properly, the recording paper must quickly absorb the ink and ink vehicles directly after printing, maximize the ink optical density, minimize bleeding and wicking of the ink, and provide good water and light fastness. To obtain a paper with the above functions, the paper is usually treated with one or more coatings.

Ink jet paper coatings typically comprise silica pigment for its high absorption power and a polymeric binder, such as poly(vinyl alcohol), for its high binding strength. Non-silica pigments, such as clays, calcium carbonate, titanium dioxide, and aluminum hydrate, are also used. Other known polymeric binders include poly(vinylpyrrolidone), styrene-butadiene copolymers, poly(vinyl acetate), starch, and amine functional polymers such as amine functional poly(vinyl alcohol).

Amine functional poly(vinyl alcohol) is typically produced by the copolymerization of vinyl acetate with amine functional monomers, such as trimethyl-(3-methacrylamidopropyl)ammonium chloride, N-vinylformamide, or acrylamide, followed by saponification to form the poly(vinyl alcohol) derivative. However, there are disadvantages to this approach. The selection of amino comonomers is very limited due to their incompatibility with the saponification conditions to produce poly(vinyl alcohol). Depending on the monomer which is copolymerized with the vinyl acetate, saponification can have a deleterious effect on the comonomer. For example, when 2-(dimethylamino)ethyl methacrylate (DMAEMA) is the comonomer, saponification results in hydrolysis of the ester bond, thus removing the active amine functionality from the polymer backbone. Another disadvantage which limits the number of comonomers that can be used for the preparation of amine functional poly(vinyl alcohol) is the reactivity ratio of the comonomer with vinyl acetate. Depending on these reactivity ratios; there can be severe limitations not only on the level of amine monomer incorporation into the vinyl acetate copolymer, but also on the attainable range of copolymer molecular weights.

Another approach to producing amine functional poly(vinyl alcohol) involves post-reacting poly(vinyl alcohol) with amino synthons, such as aminobutyraldehyde dimethyl acetal (ABAA) or free radical graft copolymerization with monomers, such as 2-(dimethylamino)ethyl methacrylate (DMAEMA). Graft copolymerizing amine functional monomers with poly(vinyl alcohol) provides some advantages over the traditional copolymerization with vinyl acetate and subsequent saponification. For example, by using poly(vinyl alcohol) as a reactive synthon to graft polymerize other monomers, the saponification step is circumvented, thereby allowing the use of a much larger number of amine functional monomers and access to a wider range of amine functional poly(vinyl alcohol) compositions. Furthermore, issues that can arise from the monomer reactivity ratios is avoided making it much easier to control the amount of amine functionality introduced on the poly(vinyl alcohol) backbone via a grafted chain. Another advantage of graft polymerizing amine functional monomers onto poly(vinyl alcohol) versus copolymerization with vinyl acetate followed by saponification is the formation of a very different polymer structure. The amine functional poly(vinyl alcohol) produced via copolymerization with vinyl acetate and saponification affords a copolymer with the amine monomer incorporated into the polymer backbone, which can hinder and mask the activity of the amine in some applications. However, the grafted poly(vinyl alcohol) copolymer can contain long chains of polyamine off the poly(vinyl alcohol) backbone which enhances the activity of the amine functionality, since it is more accessible, and provides for a much better balance of properties of the polyamine versus the poly(vinyl alcohol). One potential drawback in graft polymerization reactions is the simultaneous production of homopolymer or copolymers of the monomers being grafted to the poly(vinyl alcohol), ultimately resulting in a blend of polymers.

Most of the commercially available amine functional homo- and copolymers and amine functional poly(vinyl alcohol)s are economically unattractive. The commercially available amine functional poly(vinyl alcohol)s, in addition to being costly, also suffer from low levels of amine functionality. As a result of the low levels of amine functionality, these materials fail to meet the stringent performance requirements for good ink jet print quality, especially for the high-end, photographic grade ink jet papers. The printed image density and sharpness are inadequate, as is the water and light resistance. There has, therefore, been a continuing need to produce a higher performing polymeric system that will provide good printed image density and sharpness as well as water and light resistance. There is also interest in producing high performing polymeric systems for other ink receptive substrates, such as polyethylene, polypropylene, poly(ethylene terephthalate), vinyl polymers, and nonwovens.

Much of the prior art addresses the performance issues of ink jet paper coatings by blending various synthetic amine containing polymers or copolymers into ink jet coating compositions. The ratios of amine containing polymers or copolymers, poly(vinyl alcohol) binder, pigment, and other additives, are then varied to achieve the desired final ink jet paper properties. However, compatibility problems can arise using such blends. For example: 1) when the ink jet coating composition is prepared and blended together, phase separation, thickening, and/or flocculation can occur resulting in an uncoatable system; 2) the blended polymer composition can be incompatible with other reagents which are often used in ink jet coating formulations; and 3) once the paper is coated and dried the incompatibility of the blends can result in a heterogeneous coating surface, which translates into varying degrees of image quality once printed.

JP58 186696 (1983) discloses an internal agent used in the wet end of papermaking comprising a cationated poly(vinyl alcohol) which is produced by graft copolymerization of poly(vinyl alcohol) with an aminoalkyl methacrylate or aminoalkyl acrylate, especially dimethylaminoethyl methacrylate and 3-trimethyl-2-hydroxypropyl methacrylate ammonium chloride. The internal agent is reported to provide filler retention yield, paper strength, and sizing in neutral paper.

JP55 125109 (1980) discloses a water soluble high molecular weight composite material which is obtained by polymerizing water soluble ethylene type unsaturated monomers, such as alkylaminoalkyl acrylates or methacrylates, in the presence of a high molecular weight compound, such as starch, poly(ethylene glycol), and poly(vinyl alcohol), having at least one of the following functional groups: ether, hydroxy, and carboxy. The composite material is reported to exhibit good stability and fluidity and to be useful in a variety of areas; e.g., as a dye, paper-treating agent, and viscosity increasing agent.

JP 93 67432 (1993) (abstract) discloses an ink jet recording paper containing a formulation consisting of a copolymer of vinyl alcohol with a cationic monomer such as trimethyl-3-(1-acrylamidopropyl)ammonium chloride and non-colloidal silica powder.

JP 61 230979 (1986) (abstract) discloses an ink jet recording paper having a coated layer containing synthetic amorphous silica and a water soluble polymer binder, preferably; cation-modified poly(vinyl alcohol).

JP 63-149183 (1988) discloses an ink jet recording sheet suitable for high speed recording and multi-color recording. The sheet has an absorption layer containing a graft polymer which is 10 to 60 wt % poly(vinyl alcohol) and 40 to 90 wt % of specified unsaturated compounds, such as acrylamide, methacrylamide, acrylonitrile, and acrylic and methacrylic esters.

JP 63 162276 (1988) (abstract) discloses a silica previously treated with a water-soluble resin which is contained on or in a surface to be recorded. The water-soluble resin is poly(vinyl alcohol), albumin, gelatin, casein, etc.

JP 5-278322 (1993) discloses a recording sheet with good ink absorptivity, image quality, and water resistance which has a recording layer in which the principal components are a quaternary ammonium salt polymer, a cation modified poly(vinyl alcohol), and a hydroxyl group crosslinkable compound. The quaternary ammonium salt polymer has at least one quaternary ammonium salt in its repeating unit chain; e.g., poly(2-hydroxy-3-methacryloxypropyltrimethylammonium chloride and poly(dimethylaminoethyl methacrylate) salt. The cation modified poly(vinyl alcohol) is obtained by saponification of a copolymer of vinyl acetate and an ethylenically unsaturated monomer that has cationic groups.

JP 5-278323 (1993) discloses a recording sheet with good ink absorption, image quality, and water resistance, in which at least one side of a plastic film is covered with a recording layer produced by laminating a dye fixing layer and an ink absorption layer in that order. The principal components of the dye fixing layer are a quaternary ammonium salt polymer, a cation modified poly(vinyl alcohol), and a hydroxyl group crosslinkable compound, and the principal components of the ink absorption layer are a water-soluble macromolecule and a polymer obtained by grafting at least one compound having unsaturated bonds (e.g., vinyl esters, unsaturated carboxylic acid esters, and unsaturated carboxylic acid amides) to a polyester resin containing hydrophilic groups.

U.S. 5,270,103 (Oliver et al., 1993) discloses a receiver sheet which consists of a substrate and a coating containing a pigment and a binder. The binder comprises poly(vinyl alcohol) and an additional binder component; for example, a cationic polyamine, such as those of the type poly(2-hydroxypropyl-1, 1-N-dimethyl ammonium chloride) which are relatively insensitive to pH variations compared to other cationic polyamides, or a cationic polyacrylamide. The receiver sheet is particularly useful for printing with aqueous based inks such as in ink jet printing systems.

EP-869,010 B1(1999) discloses ink receiving layers containing at least one copolymeric substance for use as coatings on image receiving sheets. The copolymeric substance contains primary or secondary amino groups and vinyl ester derived hydroxy groups.

### BRIEF SUMMARY OF THE INVENTION

This invention relates to improved coatings for ink receptive media, or substrates, such as sheets of paper, polyethylene, polypropylene, polyesters, and nonwovens. The improvement resides in the use of an ink receptive coating composition which incorporates a polymer having a plurality of pendent hydroxyl groups which has been graft polymerized with an amine functional monomer. When applied to a surface of an ink receptive medium, the coating composition imparts high optical density images and excellent water resistance. The amine modified polymer is formed by post-modification of the hydroxyl containing polymer via grafting, e.g. aqueous free radical grafting, with ethylenically unsaturated monomers containing primary, secondary, tertiary, or quaternary amine functionality. The present invention provides a single, one package, coating composition which incorporates the dye fixative properties of cationic polymers with the high pigment binding power of poly(vinyl alcohol) based polymer compositions. It is particularly useful in ink jet paper applications.

Thus, the present invention provides, in one aspect, an ink receptive coating composition comprising an aqueous based polymeric binder and, optionally, a pigment and/or other additives, which composition comprises as the aqueous based polymeric binder an aqueous based composition comprising a graft copolymer prepared from a polymer having a plurality of pendent hydroxyl groups (e.g. poly(vinyl alcohol)), characterised in that the said graft copolymer is prepared by way of grafting, e.g. free radical grafting, of said polymer with an amine functional ethylenically unsaturated monomer having primary, secondary, tertiary or quaternary amine groups, wherein the grafted copolymer contains 0.5 to 70 mol % amine functional monomer. In certain embodiments, the ink receptive coating comprises as the aqueous based polymeric binder an aqueous based composition comprising a graft polymer selected from the group consisting of poly(vinyl alcohol) grafted copolymers and vinyl alcohol copolymer grafted copolymers, characterised in that said poly(vinyl alcohol) grafted copolymers are prepared by grafting an amine functional ethylenically unsaturated monomer onto poly(vinyl alcohol) and in that said vinyl alcohol copolymer grafted copolymers are prepared by grafting an amine functional ethylenically unsaturated monomer onto vinyl alcohol copolymer, wherein the grafted poly(vinyl alcohol) copolymer contains 0.5 to 70 mol % amine functional monomer.

The present invention also provides, in another aspect, an ink receiving medium comprising a substrate coated with an ink receptive composition, characterised in that the ink receptive composition is a coating composition according to the present invention.

In certain embodiments, an ink receptive coating composition comprises a pigment and an aqueous based poly(vinyl alcohol) graft copolymer, said poly(vinyl alcohol) graft copolymer formed by graft copolymerising poly(vinyl alcohol) with an amine functional ethylenically unsaturated monomer, and in certain other embodiments an ink receiving medium comprises a substrate coated with an ink receptive composition that comprises a poly(vinyl alcohol) graft copolymerised with an amine functional ethylenically unsaturated monomer, in either case the said monomer being selected from 2-(diethylamino)ethyl methacrylate, 2-(dimethylamino)ethyl acrylate, 3-(dimethylamino)-2,2-dimethylpropyl acrylate, 2-(diethylamino)ethyl acrylate, 2-(tertiary-butylamino)ethyl methacrylate, 2-(trimethylammonium)ethyl methacrylate chloride, 2-(trimethyl-ammonium)ethyl acrylate chloride, 3-(dimethylamino)propyl methacrylamide, methacrylamidopropyl trimethylammonium chloride, diallyldimethylammonium chloride, vinylpyridine, allylamine, and combinations thereof.

The present invention also provides, in a further aspect, a process for preparing an ink receiving medium, which process comprises applying a coating of an aqueous based ink receptive coating composition to a substrate, characterized in that the ink receptive coating composition is a coating composition according to the present invention.

The present invention also provides, in yet a further aspect, a coated ink jet recording paper comprising a paper substrate coated with an ink receptive composition, characterised in that the ink receptive composition is a coating composition according to the present invention, said coating composition comprising a mineral pigment.

There are several advantages to incorporating the amine modified polymers into ink receptive coating compositions:
- an ability to prepare high quality ink receptive media with only one coating of the composition;
- an ability to produce high quality ink receptive media which, when printed, give high optical density images with regard to monochrome black, composite black, and primary colors;
- an ability to produce high quality ink receptive media which, when printed, yield waterfast images;
- an ability to produce high quality ink receptive media which, when printed, yields images with good lightfastness; and
- an ability to achieve fast ink dry times after printing onto ink receptive media coated with the amine modified polymeric compositions.

The improved coated ink receptive medium is generally prepared by:
- reacting an aqueous solution of a polymer having a plurality of pendent hydroxyl groups on the polymer chain with an ethylenically unsaturated monomer containing primary, secondary, tertiary, or quaternary amine functionality in the presence of a free radical initiator to obtain an aqueous based grafted polymer composition;
- optionally, incorporating the grafted polymer composition, without additional processing, into a pigment slurry;
- optionally, combining the grafted polymer composition with other additives, such as surfactants, poly(vinyl alcohol), and vinyl acetate-ethylene latexes;
- coating a substrate with the grafted polymer composition; and
- drying the coated substrate.

### DETAILED DESCRIPTION OF THE INVENTION

The improved ink receptive media according to the present invention has a coating applied thereon which contains a polymeric binder comprising a polymer having a plurality of pendent hydroxyl groups on the polymer chain with an amine functional ethylenically unsaturated monomer grafted thereon. One of the key findings contributing to the novelty of this invention is the superior performance achieved with an amine monomer grafted poly(vinyl alcohol) copolymer compared to various saponified vinyl acetate copolymers.

Representative amine functional monomers which can be employed for grafting onto the hydroxyl containing polymer, include monoalkylaminoalkyl methacrylate, monoalkylaminoalkyl acrylate, dialkylaminoalkyl methacrylate, trialkylammoniumalkyl methacrylate, trialkylammoniumalkyl acrylate, dialkylaminoalkyl acrylate, dialkylaminoalkyl (meth)acrylamides, diallyldialkylammonium chloride, allylamine, or vinylpyridine. The alkyl groups of the above cited functional monomers can be straight chain or branched C₁ to C₆ alkyl groups. Examples of appropriate monomers are 2-(dimethylamino)ethyl methacrylate, 2-(diethylamino)ethyl methacrylate, 2-(dimethylamino)ethyl acrylate, 3-(dimethylamino)-2,2-dimethylpropyl acrylate, 2-(diethylamino)ethyl acrylate, 2-(*tertiary-*butylamino)ethyl methacrylate, 2-(trimethylammonium)ethyl methacrylate chloride, 2-(trimethylammonium)ethyl acrylate chloride, 3-(dimethylamino)propyl methacrylamide, methacrylamidopropyl trimethylammonium chloride, diallyldimethylammonium chloride, vinylpyridine, allylamine, or combinations thereof.

Polymers having a plurality of pendent hydroxyl groups can be formed by the polymerization of vinyl or acrylic esters in which the ester unit contains from 1 to 4 carbon atoms. The pendent ester groups, when hydrolyzed, form polymers containing pendent hydroxyl groups. A preferred class of polymers having a plurality of pendent hydroxyl groups are based upon hydrolyzed vinyl acetate polymers wherein vinyl acetate is polymerized as a homopolymer or in conjunction with other monomers to form copolymers and are known as poly(vinyl alcohol) or vinyl alcohol copolymers. The amount of vinyl alcohol should be sufficient to enable free radical graft polymerization in an aqueous solution; i.e., render the polymer at least partially soluble in an aqueous medium. Typically the vinyl ester, specifically vinyl acetate, prior to hydrolysis will comprise from 60 to 100 mol % of the polymer, preferably at least 90 mol % of the polymer. The poly(vinyl alcohol) used in this invention, generally, has a weight average molecular weight (M_{w}) ranging from about 5,000 to 300,000, preferably 15,000 to 200,000. Alternatively, the poly(vinyl alcohol) can have a degree of polymerization (Dp) of from 100 to 5000, preferably 200 to 3500. Poly(vinyl alcohol) is made commercially by the hydrolysis of poly(vinyl acetate) and typically has a hydrolysis level ranging from about 85 to greater than 99 mol %. For this invention, the level of hydrolysis can range from 70 to 100 mol %, preferably 75 to 98 mol %. Mixed poly(vinyl alcohol) grades, using combinations of poly(vinyl alcohol)s varying in molecular weight and hydrolysis level, can also be employed in the present invention.

A variety of monomers may be copolymerized with a vinyl ester to produce polymers containing vinyl alcohol units. Monomers which can be polymerized with the vinyl ester, preferably vinyl acetate, include ethylene, unsaturated acids such as maleic, acrylic and methacrylic acid, and esters, such as the C₁ to C₁₂, preferably C₁ to C₆ alkyl esters of acrylic or methacrylic acid. In many instances, these polymers can be hydrolyzed to produce different grades of poly(vinyl alcohol) including, for example, hydrolyzing only the vinyl ester and leaving the acrylic ester functionality intact. Other monomers having from 2 to 12 carbon atoms such as alkyl maleates (e.g., dibutyl maleate and the like) may be polymerized as desired with vinyl acetate to control hydrophilic and hydrophobic content.

The free radical grafting reaction can be conducted in homogeneous aqueous solutions at a temperature necessary to liberate free radicals for the graft polymerization. Typical temperatures range from 50 to 95°C, preferably 60 and 80 °C. Reaction solids levels (ratio of poly(vinyl alcohol) to water) can vary from 5% to 40%, depending on the molecular weight of the poly(vinyl alcohol), preferably from 10% to 30%. Reaction times typically range from 1 to 5 hours. When amine functional acrylates or methacrylates are used for grafting to the poly(vinyl alcohol), the use of an equimolar amount of acid is preferred to reduce or eliminate the hydrolysis of the amino-ester moiety. Acceptable acids include acetic acid, hydrochloric acid, sulfuric acid, and the like. The grafting reaction can be conducted in a batch mode or in a semi-batch mode in which an aqueous solution of the amine functional monomer, with or without equimolar acid quantities, is added to a stirred solution of poly(vinyl alcohol) in water via delay feed. In the semi-batch mode, the initiator can also be added via a delay aqueous solution feed simultaneously with the monomer solution, or can be charged to the reactor in one portion prior to starting the monomer solution delay feed. Example of free radical initiators which can be employed in this grafting reaction include ammonium persulfate, sodium persulfate, potassium persulfate, tert-butylhydroperoxide, hydrogen peroxide and other good proton abstracters. Approximately 0.1 to 10 wt % (preferably 0.5 to 3.0 wt %) of the initiator, based on the amount of poly(vinyl alcohol), is used. High conversions of monomer to polymer have been observed in either batch or semi-batch process modes. It is preferable to continue the reaction until less than 0.5% of the amine functional monomer remains unreacted. Mole percent levels of amine functionalization, i.e., grafting of amine monomer, of the poly(vinyl alcohol) typically range from 0.5 to 70 mol %, preferably from 5 to 30 mol %.

The following table, Table 1, sets forth operative and preferred ranges regarding the use of amine functional monomer grafted poly(vinyl alcohol) in the ink jet coating of this invention:

**Table 1**

| | Operative Range | Preferred Range |
|---|---|---|
| Weight average molecular weight of poly(vinyl alcohol) | 5,000 - 300,000 | 15,000 - 200,000 |
| Acetate hydrolysis (mol %) | 70-100 | 75 - 98 |
| Amine content of grafted monomer (mol %) | 0.5 - 70 | 5 - 30 |
| Wt % binder in coating (dry basis) | 5 - 99 | 10 - 50 |
| Coating pH | 3-10 | 4-8 |

When the grafting reaction between the amine functional monomer and the poly(vinyl alcohol) is completed, varying amounts of homopolymer of the amine functional monomer can be present in the product. The resulting polymer product can be used directly in formulating the ink receptive coating composition without additional work-up or purification of the grafted polymer.

Ink receptive coating compositions preferably contain one or more pigments. Pigments well known in the art can be used; for example, silica, such as, silica gel, colloidal silica, precipitated silica, and fumed silica, aluminum silicate, clay, talc, calcium carbonate, magnesium silicate, barium sulfate, and the like. Silica is preferred. The pigment (dry basis) is typically incorporated in amounts ranging from about 1 to about 95 % by weight, preferably 30 to 85 % by weight, of the coating composition.

The amount of polymer binder (dry basis), can range from 5 to 99 % by weight of the ink receptive coating composition; preferably 10 to 50 wt %.

Total solids, for pigment and polymer binder, in the aqueous coating composition can range from 1 to 50 wt %, preferably 10 to 35 wt %.

The level of pigment and binder depend on the type of coater used in the preparation of the ink jet paper. For example a puddle size press application would use a low wt % of pigment relative to the binder due to viscosity limitations in comparison to an air knife coater where pigment to binder ratio would be greater.

The coating compositions can also contain conventional additives such as defoamers, surface active agents, dyes, ultraviolet absorbents, pigment dispersants, mold inhibitors, thickeners and water-resisting agents. Other polymers can be blended into the coating composition. Examples of appropriate polymers are poly(vinyl alcohol), poly(vinyl acetate), and vinyl acetate-ethylene latexes.

The coating composition can be applied to one or both sides of a variety of substrates; for example, paper, polyesters, such as poly(ethylene terephthalate), polyethylene, polypropylene, vinyl polymers, such as poly(vinyl butyral) and poly(vinyl chloride), and nonwovens, such as cellulosics and synthetic cellulosic materials. The substrates can be continuous or discrete, individual sheets.

The coating composition can be applied to a surface, or side, in amounts, on a dry weight basis, ranging from about 0.5 to 20 grams of the coating composition per square meter of the surface; preferably, 3 to 15 grams/square meter. Coat weight varies depending on the type of coating applicator and the surface to which the coating is applied. For example, in paper applications, a puddle size press may only apply a coat weight of 2 to 4 grams per square meter. An air knife can be used to apply a greater coat weight to a variety of substrates; for example, up to 10 grams per square meter-can be applied using an air knife.

Paper is the preferred substrate for the coating compositions of this invention. Of the paper substrates, uncoated wood free paper is preferred. The coating compositions are applied on the dry end of the papermaking process.

Not intending to be bound by theory, it is believed the amine group in the amine functional polymers provides a cationic charge on the paper surface which reacts with the anionic sulfonic acid groups of the direct or acid dye of the ink jet inks to form an insoluble salt. As such, the inks become waterfast on the paper surface. Pigment binding strength is also improved with the use of amine functional poly(vinyl alcohol) due to the strong absorption of the amines with the silanol groups on the silica pigment.

The invention will be further clarified by a consideration of the following examples, which are intended to be purely exemplary of the invention.

### Example 1

### Preparation of Poly(vinyl alcohol) Grafted with 10 Mol % 2-(Dimethylamino)ethyl Methacrylate (DMAEMA) via Semi-Batch Mode

Airvol® 523 (200 g, DP - 1200, 88% hydrolyzed) poly(vinyl alcohol) was dissolved in deionized water (1200 ml) by stirring at 80 °C for 1 hour. The reaction temperature was maintained at 80 °C and a solution consisting of ammonium persulfate (0.5 g) dissolved in water (20 ml) was added to the reactor in one portion. The following two solutions were then introduced into the reactor via delay feed: 1) a solution consisting of 63.0 g of 2-(dimethylamino)ethyl methacrylate, 24.0 g of acetic acid, and 150 ml of water was added over a 90-minute delay feed period, and 2) a solution of ammonium persulfate (4.0 g) and water (100 g) was added over a 120 minute delay feed period. Upon completing the delay feeds, stirring was continued at 80 °C for 2 hours. After cooling to room temperature, the resulting reaction mixture was used, without further work-up or purification, for formulating the paper coatings. High pressure liquid chromatography (HPLC) data revealed the presence of 4.8 wt % poly(DMAEMA) acetate homopolymer (max. theoretical homopolymer formation = 31 wt %), suggesting that a majority (approximately 84 %) of the DMAEMA charged to the reactor is grafted to the poly(vinyl alcohol).

### Example 2

### Preparation of Poly(vinyl alcohol) Grafted with 10 Mol % 2-(Dimethylamino)ethyl Methacrylate (DMAEMA) via Batch Mode

Airvol® 523 (100 g, DP - 1200, 88% hydrolyzed) poly(vinyl alcohol) was dissolved in deionized water (600 ml) by stirring at 80 °C for 1 hour. The reaction temperature was maintained at 80 °C and a solution consisting of 2-(dimethylamino)ethyl methacrylate (31.4 g), acetic acid (12.0 g), and water (75 ml) was added to the reactor in one portion. Subsequently, a solution consisting of ammonium persulfate (2.4 g) in water (60 ml) was added to the reactor in one portion and the resulting reaction mixture was stirred at 80 °C for 5 hours. After cooling to room temperature, the resulting reaction mixture was used without further work-up or purification for formulating the paper coatings. High pressure liquid chromatography (HPLC) data revealed the presence of 8.1 wt % poly(DMAEMA) acetate homopolymer, suggesting less (approximately 74%) of the DMAEMA charged to the reactor is grafted to the poly(vinyl alcohol) compared to the grafting reaction conducted under semi-batch reaction conditions (Example 1).

### Example 3

### Semi-Batch Mode at Lower Temperature

The procedure of Example 1 was followed, but at a 60 °C graft polymerization temperature. High pressure liquid chromatography (HPLC) data revealed the presence of 5.0 wt % poly(DMAEMA) acetate homopolymer (max. theoretical homopolymer formation = 31 wt %), suggesting that a majority (about 84%) of the DMAEMA charged to the reactor is grafted to the poly(vinyl alcohol).

### Example 4

### Batch Mode at Lower Temperature

The procedure of Example 2 was followed, but at a 60 °C graft polymerization temperature. High pressure liquid chromatography (HPLC) data revealed the presence of 6.4 wt % poly(DMAEMA) acetate homopolymer (max. theoretical homopolymer formation = 31 wt %), suggesting that a majority (approximately 79%) of the DMAEMA is grafted to the poly(vinyl alcohol), resulting in a polymer containing about 15 wt % DMAEMA. DMAEMA conversion times are significantly improved when the grafting reaction is run at this lower temperature. For example under batch conditions, >90% of the DMAEMA is converted to polymer after a 30 minute reaction time at 60 °C, whereas it takes >5 hours to achieve the same conversion level at 80 °C.

### Example 5

### Preparation of Poly(vinyl alcohol) Grafted with 20 Mol % 2-(Dimethylamino)ethyl Methacrylate (DMAEMA) via Semi-Batch Mode

Airvol® 523 (100 g, DP ~ 1200, 88% hydrolyzed) poly(vinyl alcohol) was dissolved in deionized water (600 ml) by stirring at 80 °C for 1 hour. The reaction temperature was maintained at 80 °C and a solution consisting of ammonium persulfate (0.5 g) dissolved in water (10 ml) was added to the reactor in one portion. The following two solutions were then introduced into the reactor via delay feed: 1) a solution consisting of 63.0 g of 2-(dimethylamino)ethyl methacrylate, 24.0 g of acetic acid, and 150 ml of water was added over a 225-minute delay feed period, and 2) a solution of ammonium persulfate (4.1 g) and water (100 g) was added over a 245 minute delay feed period. Upon completing the delay feeds, stirring was continued at 80 °C for 2 hours. After cooling to room temperature, the resulting reaction mixture was used, without further work-up or purification of the grafted polymer, for formulating the paper coatings. High pressure liquid chromatography (HPLC) data revealed the presence of 15.0 wt % poly(DMAEMA) acetate homopolymer (max. theoretical homopolymer formation = 46.5 wt %), suggesting that a majority (approximately 68%) of the DMAEMA charged to the reactor is grafted to the poly(vinyl alcohol).

### Example 6

### Preparation of Poly(vinyl alcohol) Grafted with 4-Vinylpyridine

Airvol® 523 (125 g, DP - 1200, 88% hydrolyzed) poly(vinyl alcohol) was dissolved in deionized water (600 ml) by stirring at 80 °C for 1 hour. The reaction temperature was lowered to 70 °C and a solution consisting of 11.2 g of ammonium persulfate in 25 ml of water was introduced into the polymer solution in one portion. 4-Vinylpyridine (52.0 g) was then added to the reaction mixture over a 45 minute period. Upon completing this addition, the reaction mixture was stirred at 70 °C for 2 hours. During the course of this reaction the solution goes from being homogeneous to an emulsion. After cooling to room temperature, the resulting, reaction mixture was used without further work-up or purification for formulating the paper coatings.

### Example 7

### Ink Jet Paper Coating Preparation

Sheets of uncoated base paper were coated for the purpose of evaluating ink jet optical density for several colors, waterfastness, and lightfastness. A paper coating dispersion was prepared by mixing 800 parts water, 100 parts silica pigment, and 40 parts (solids basis) of the poly(vinyl alcohol)-g-poly(DMAEMA) acetate copolymer, prepared as described in the above examples. In preparing the coatings, a dispersion of silica pigment in water was prepared first followed by the addition of poly(vinyl alcohol)-g-poly(DMAEMA) acetate aqueous solution to this dispersion under high shear. The resulting dispersion was coated onto one side of sheets uncoated wood free paper having a basis weight of 40 grams/square meter at a coat weight of 7-8 g/m², using a Meyer Rod draw down bar. After coating and drying at 250 °F for 60 seconds, the sheets were printed with a Hewlett Packard 560 ink jet printer using an HP test pattern distributed by Hewlett Packard for the purpose of testing ink jet paper media. After printing, the samples were measured for optical density using a Tobias IQ 200 Reflection Densitometer. The waterfastness test was performed by first measuring the monochrome black ink density after printing. The printed area was then immersed in distilled water for 30 seconds with slight agitation and dried on a hot plate under tension. The optical density was then measured again. Lightfastness was determined by measuring the optical density of ink jet printed paper before and after 70 hour UV light exposure.

Table 2 presents data on the ink optical density, water resistance, and light resistance of ink jet coatings containing amine functional monomer grafted poly(vinyl alcohol) binders and comparative examples utilizing a standard poly(vinyl alcohol) binder (sample 1), saponified vinyl acetate copolymer (sample 14), and a commercial cationic poly(vinyl alcohol) binder (sample 15).

**Table 2**

| | | Ink Optical Density | | | | | | |
|---|---|---|---|---|---|---|---|---|
| Sample | Polymeric Binder | Monochrome Black | Magenta | Yellow | Cyan | Composite Black | Waterfast ness^{a} | Lightfast -ness^{b} |
| 1 | Airvol® 523 PVOH | 1.16 | 0.87 | 0.61 | 1.12 | 0.82 | 51.7 | 38.5 |
| 2 | PVOH/DMAEMA 10 mol % (9.5% l, semi-batch) | 1.24 | 0.82 | 0.54 | 1.1 | 0.85 | 0 | 46.6 |
| 3 | PVOH/DMAEMA 10 mol % (9.5% I, semi-batch) | 1.28 | 0.84 | 0.54 | 1.07 | 0.95 | 0 | nd |
| 4 | PVOH/DMAEMA 10 mol % (9.5% 1, batch) | 1.2 | 0.76 | 0.5 | 0.99 | 0.8 | 0 | nd |
| 5 | PVOH/DMAEMA 10 mol % (1 % I, semi-batch) | 1.20 | 0.82 | 0.57 | 1.11 | 0.84 | 9.2 | nd |
| 6 | PVOH/DMAEMA 10 mol % (0.5% l, semi-batch) | 1.18 | 0.81 | 0.59 | 1.07 | 0.81 | 11.0 | nd |
| 7 | PVOH/DMAEMA 10 mol % (1% l, batch) | 1.19 | 0.88 | 0.59 | 1.16 | 0.83 | 16.0 | nd |
| 8 | PVOH/DMAEA 10 mol % (1% l, semi-batch) | 1.10 | 0.88 | 0.62 | 1.22 | 0.72 | 20.9 | nd |
| 9 | PVOH/DMAEMA 5 mol % (semi-batch) | 1.23 | 0.86 | 0.55 | 1.15 | 0.82 | 8.1 | nd |
| 10 | PVOH/TMAEMA 10 mol % (5% l, semi-batch) | 1.36 | 0.90 | 0.64 | 1.14 | 0.92 | 0 | nd |
| 11 | PVOH/DMAPMAm 10.mol % (5% l, semi-batch) | 1.37 | 0.95 | 0.65 | 1.15 | 0.88 | 4.0 | nd |
| 12 | PVOH/DMAEMA 21 mol % (batch) | 1.35 | 0.88 | 0.54 | 1.05 | 0.95 | 0 | 50.5 |
| 13 | PVOH/4-VP 20 mol% (semi-batch) | 1.09 | 0.74 | 0.56 | 1:0 | 0.81 | 0 | 61.6 |
| 14 | 4 mol% DMAPMAm-co-PVOH (saponified VAM/ DMAPAm copolymer) | 1.09 | 0.89 | 0.60 | 1.25 | 0.71 | 32.7 | nd |
| 15 | POVAL® C-506 (cationic PVOH) | 1.23 | 0.95 | 0.64 | 1.23 | 0.91 | 45.5 | nd |

| | | | | | | | | |
|---|---|---|---|---|---|---|---|---|
| * Polymeric binder used to prepare the herein described ink jet coating composition mol % is the amount of amine monomer used in preparation of the graft copolymer. % I is the amount of initiator used in the free radical graft reaction. | | | | | | | | |
| PVOH : poly(vinyl alcohol) | | | | | | | | |
| DMAEMA: 2-(dimethylamino)ethyl methacrylate | | | | | | | | |
| DMAEA: 2-(dimethylamino)ethyl acrylate | | | | | | | | |
| TMAEMA: 2-(trimethylammonium)ethyl methacrylate | | | | | | | | |
| DMAPMAm: 3-(dimethylamino)propyl methacrylamide | | | | | | | | |
| 4-VP: 4-Vinylpyridine | | | | | | | | |
| VAM : Vinyl acetate monomer | | | | | | | | |
| POVAL® C-506: Cationic polyvinyl alcohol supplied by Kuraray | | | | | | | | |
| ^{a}Loss (%) of monochrome black ink optical density upon 30 second water soak. | | | | | | | | |
| ^{b}Total % ink loss (all colors) upon 71 hour UV irradiation. | | | | | | | | |
| nd : no data | | | | | | | | |

The results show that waterfastness is significantly improved with the use of several different amine functional monomer grafted poly(vinyl alcohol) compositions (samples 2-13) compared to poly(vinyl alcohol) alone (sample 1). All of the DMAEMA grafted poly(vinyl alcohol)s display substantially better, if not complete, waterfastness. Optical ink densities, in general, are maintained or improved in compositions of samples 2-13. It is interesting to note that the level of initiator used during the graft copolymerization of DMAEMA with poly(vinyl alcohol) appears to be important for ink jet performance. For example, there is better optical ink density and waterfastness for sample 3 compared to samples 5 and 6). Although ink density and lightfastness for sample 13 (vinylpyridine grafted poly(vinyl alcohol)) are not as good as poly(vinyl alcohol) alone (sample 1), the print is completely waterfast. Samples 2-4, 10, and 12, in particular, show excellent ink optical density as well as exceptionally good waterfastness. Furthermore, the DMAEMA grafted poly(vinyl alcohol) materials (e.g., sample 3 and 9), are far superior in overall ink jet performance, particularly in waterfastness, when compared to a saponified vinyl acetate copolymer (sample 14) and a commercial cationic poly(vinyl alcohol) (sample 15).

## Claims

1. An ink receptive coating composition comprising an aqueous based polymeric binder and, optionally, a pigment and/or other additives, which composition comprises as the aqueous based polymeric binder an aqueous based composition comprising a graft copolymer prepared from a polymer having a plurality of pendent hydroxyl groups, **characterised in that** the said graft copolymer is prepared by way of grafting of said polymer with an amine functional ethylenically unsaturated monomer having primary, secondary, tertiary or quaternary amine groups, wherein the grafted copolymer contains 0.5 to 70 mol % amine functional monomer.

2. The ink receptive coating composition of claim 1 which comprises as the aqueous based polymeric binder an aqueous based composition comprising a graft polymer selected from the group consisting of poly(vinyl alcohol) grafted copolymers and vinyl alcohol copolymer grafted copolymers, **characterised in that** said poly(vinyl alcohol) grafted copolymers are prepared by grafting an amine functional ethylenically unsaturated monomer onto poly(vinyl alcohol) and **in that** said vinyl alcohol copolymer grafted copolymers are prepared by grafting an amine functional ethylenically unsaturated monomer onto vinyl alcohol copolymer, wherein the grafted poly(vinyl alcohol) copolymer contains 0.5 to 70 mol % amine functional monomer.

3. The ink receptive coating composition of claim 1 or 2, wherein the amine functional ethylenically unsaturated monomer is selected from the group consisting of allylamine, alkyleneamine, vinylpyridine, a monoalkylaminoalkyl methacrylate, a monoalkylaminoalkyl acrylate, 2-(diethylamino)ethyl methacrylate, a dialkylaminoalkyl acrylate, a trialkylammoniumalkyl methacrylate, a trialkylammoniumalkyl acrylate, a trialkylammoniumalkyl methacrylamide, a diallyldialkylammonium chloride, a trialkylammoniumalkyl acrylamide; and combinations thereof.

4. The ink receptive coating composition of claim 1 or 2 wherein the amine functional ethylenically unsaturated monomer is selected from the group consisting of 2-(dimethylamino)ethyl methacrylate, 2-(diethylamino)ethyl methacrylate, 2-(dimethylamino)ethyl acrylate, 3-(dimethylamino)-2,2-dimethylpropyl acrylate, 2-(diethylamino)ethyl acrylate, 2-(tertiary-butylamino)ethyl methacrylate, 2-(trimethylammonium)ethyl methacrylate chloride, 2-(trimethyl-ammonium)ethyl acrylate chloride, 3-(dimethylamino)propyl methacrylamide, methacrylamidopropyl trimethylammonium chloride, diallyldimethylammonium chloride, vinylpyridine, allylamine, and combinations thereof.

5. The ink receptive coating composition of claim 2, 3 or 4 wherein the weight average molecular weight of the poly(vinyl alcohol) ranges from 5,000 to 300,000, and the degree of hydrolysis of the poly(vinyl alcohol) ranges from 70 to 100 mol %.

6. The ink receptive coating composition of claim 2, 3 or 4 wherein the weight average molecular weight of the poly(vinyl alcohol) ranges from 15,000 to 200,000, the degree of hydrolysis of the poly(vinyl alcohol) ranges from 75 to 98 mol%, and the grafted poly(vinyl alcohol) copolymer contains 5 to 30 mol % amine functional monomer.

7. The ink receptive coating composition of any of claims 1 to 6 comprising a pigment, e.g. a mineral pigment.

8. The ink receptive coating composition of claim 7 wherein the pigment is silica.

9. The ink receptive coating composition of any of claims 1 to 8 wherein said grafting is free radical grafting.

10. An ink receiving medium comprising a substrate coated with an ink receptive composition, **characterised in that** the ink receptive composition is a coating composition according to any of claims 1 to 9.

11. The ink receiving medium of claim 10 wherein the substrate is selected from the group consisting of paper, polyethylene, polypropylene, a polyester, a vinyl polymer, and a nonwoven.

12. The ink receiving medium of claim 10 or 11, being a coated ink jet recording paper, wherein the said substrate is paper and the said coating composition comprises a mineral pigment.

13. The ink receiving medium of claim 12, wherein the mineral pigment is silica and the polymer having a plurality of pendent hydroxyl groups is poly(vinyl alcohol).

14. The ink receiving medium of claim 13 wherein the polymeric binder is present in an amount, on a solids basis, of 10 to 50 mol % of the coating composition and the silica is present in an amount of 30 to 85 wt % of the coating composition.

15. A process for preparing an ink receiving medium, which process comprises applying a coating of an aqueous based ink receptive coating composition to a substrate, **characterized in that** the ink receptive coating composition is a coating composition according to any of claims 1 to 9.

## Patentansprüche

1. Tintenaufnehmende Beschichtungszusammensetzung, die ein wässriges polymeres Bindemittel und gegebenenfalls ein Pigment und/oder andere Additive umfasst, wobei die Zusammensetzung als wässriges polymeres Bindemittel eine wässrige Zusammensetzung umfasst, die ein Pfropfcopolymer umfasst, das aus einem Polymer mit einer Menge von seitenständigen Hydroxygruppen hergestellt wird, **dadurch gekennzeichnet, dass** das Pfropfcopolymer durch Pfropfen des Polymers mit einem aminfunktionellen ethylenisch ungesättigten Monomer mit primären, sekundären, tertiären oder quartären Amingruppen hergestellt wird, wobei das gepfropfte Copolymer 0,5 bis 70 Mol-% aminfunktionelles Monomer enthält.

2. Tintenaufnehmende Beschichtungszusammensetzung gemäß Anspruch 1, die als wässriges polymeres Bindemittel eine wässrige Zusammensetzung umfasst, die ein Pfropfcopolymer umfasst, das aus der Gruppe ausgewählt ist, die aus Polyvinylalkohol-Pfropfcopolymeren und Vinylalkohol-Copolymer-Pfropfcopolymeren besteht, **dadurch gekennzeichnet, dass** die Polyvinylalkohol-Pfropfcopolymere durch Aufpfropfen eines aminfunktionellen ethylenisch ungesättigten Monomers auf Polyvinylalkohol hergestellt werden und dass die Vinylalkohol-Copolymer-Pfropfcopolymere durch Aufpfropfen eines aminfunktionellen ethylenisch ungesättigten Monomers auf Vinylalkohol-Copolymer hergestellt werden, wobei das Polyvinylalkohol-Pfropfcopolymer 0,5 bis 70 Mol-% aminfunktionelles Monomer enthält.

3. Tintenaufnehmende Beschichtungszusammensetzung gemäß Anspruch 1 oder 2, wobei das aminfunktionelle ethylenisch ungesättigte Monomer aus der Gruppe ausgewählt ist, die aus Allylamin, Alkylenamin, Vinylpyridin, einem Monoalkylaminoalkylmethacrylat, einem Monoalkylaminoalkylacrylat, 2-(Diethylamino)ethylmethacrylat, einem Dialkylaminoalkylacrylat, einem Trialkylammoniumalkylmethacrylat, einem Trialkylammoniumalkylacrylat, einem Trialkylammoniumalkylmethacrylamid, einem Diallyldialkylammoniumchlorid, einem Trialkylammoniumalkylacrylamid und Kombinationen davon besteht.

4. Tintenaufnehmende Beschichtungszusammensetzung gemäß Anspruch 1 oder 2, wobei das aminfunktionelle ethylenisch ungesättigte Monomer aus der Gruppe ausgewählt ist, die aus 2-(Dimethylamino)ethylmethacrylat, 2-(Diethylamino)ethylmethacrylat, 2-(Dimethylamino)ethylacrylat, 3-(Dimethylamino)-2,2-dimethylpropylacrylat, 2-(Diethylamino)ethylacrylat, 2-(tert-Butylamino)ethylmethacrylat, 2-(Trimethylammonium)ethylmethacrylatchlorid, 2-(Trimethylammonium)ethylacrylatchlorid, 3-(Dimethylamino)propylmethacrylamid, Methacrylamidopropyltrimethylammoniumchlorid, Diallyldimethylammoniumchlorid, Vinylpyridin, Allylamin und Kombinationen davon besteht.

5. Tintenaufnehmende Beschichtungszusammensetzung gemäß Anspruch 2, 3 oder 4, wobei das Gewichtsmittel des Molekulargewichts des Polyvinylalkohols im Bereich von 5000 bis 300 000 liegt und der Hydrolysegrad des Polyvinylalkohols im Bereich von 70 bis 100 Mol-% liegt.

6. Tintenaufnehmende Beschichtungszusammensetzung gemäß Anspruch 2, 3 oder 4, wobei das Gewichtsmittel des Molekulargewichts des Polyvinylalkohols im Bereich von 15 000 bis 200 000 liegt, der Hydrolysegrad des Polyvinylalkohols im Bereich von 75 bis 98 Mol-% liegt und das Polyvinylalkohol-Pfropfcopolymer 5 bis 30 Mol-% aminfunktionelles Monomer enthält.

7. Tintenaufnehmende Beschichtungszusammensetzung gemäß einem der Ansprüche 1 bis 6, die ein Pigment, z.B. ein Mineralpigment, umfasst.

8. Tintenaufnehmende Beschichtungszusammensetzung gemäß Anspruch 7, wobei es sich bei dem Pigment um Siliciumoxid handelt.

9. Tintenaufnehmende Beschichtungszusammensetzung gemäß einem der Ansprüche 1 bis 8, wobei es sich bei dem Pfropfen um radikalisches Pfropfen handelt.

10. Tintenaufnahmemedium, das ein Substrat umfasst, welches mit einer tintenaufnehmenden Zusammensetzung beschichtet ist, **dadurch gekennzeichnet, dass** die tintenaufnehmende Zusammensetzung eine Beschichtungszusammensetzung gemäß einem der Ansprüche 1 bis 9 ist.

11. Tintenaufnahmemedium gemäß Anspruch 10, wobei das Substrat aus der Gruppe ausgewählt ist, die aus Papier, Polyethylen, Polypropylen, einem Polyester, einem Vinylpolymer und einem Vlies besteht.

12. Tintenaufnahmemedium gemäß Anspruch 10 oder 11, bei dem es sich um ein beschichtetes Tintenstrahl-Aufzeichnungspapier handelt, wobei es sich bei dem Substrat um Papier handelt und die Beschichtungszusammensetzung ein Mineralpigment umfasst.

13. Tintenaufnahmemedium gemäß Anspruch 12, wobei es sich bei dem Mineralpigment um Siliciumoxid und bei dem Polymer, das eine Menge von seitenständigen Hydroxygruppen aufweist, um Polyvinylalkohol handelt.

14. Tintenaufnahmemedium gemäß Anspruch 13, wobei das polymere Bindemittel in einer Menge von 10 bis 50 Mol-% der Beschichtungszusammensetzung, auf Feststoffbasis, vorhanden ist und das Siliciumoxid in einer Menge von 30 bis 85 Gew.-% der Beschichtungszusammensetzung vorhanden ist.

15. Verfahren zur Herstellung eines Tintenaufnahmemediums, wobei das Verfahren das Auftragen einer Beschichtung aus einer wässrigen tintenaufnehmenden Beschichtungszusammensetzung auf ein Substrat umfasst, **dadurch gekennzeichnet, dass** die tintenaufnehmende Beschichtungszusammensetzung eine Beschichtungszusammensetzung gemäß einem der Ansprüche 1 bis 9 ist.

## Revendications

1. Composition de revêtement ayant une affinité pour l'encre, comprenant un liant polymère aqueux et éventuellement un pigment et/ou d'autres additifs, ladite composition comprenant, en tant que liant polymère aqueux, une composition aqueuse comprenant un copolymère greffé préparé à partir d'un polymère ayant une pluralité de groupes hydroxyle latéraux, **caractérisée en ce qu'**on prépare ledit copolymère greffé par greffage dudit polymère avec un monomère éthyléniquement insaturé à fonctionnalité amine ayant des groupes d'amines primaires, secondaires, tertiaires ou quaternaires, dans laquelle le copolymère greffé contient de 0,5 à 70 % en moles de monomère à fonctionnalité amine.

2. Composition de revêtement ayant une affinité pour l'encre selon la revendication 1, comprenant, en tant que liant polymère aqueux, une composition aqueuse comprenant un polymère greffé choisi dans le groupe constitué de copolymères greffés de poly(alcool vinylique) et de copolymères greffés avec un copolymère d'alcool vinylique, **caractérisée en ce qu'**on prépare lesdits copolymères greffés de poly(alcool vinylique) en greffant un monomère éthyléniquement insaturé à fonctionnalité amine sur du poly(alcool vinylique), et **en ce qu'**on prépare lesdits copolymères greffés avec un copolymère d'alcool vinylique en greffant un monomère éthyléniquement insaturé à fonctionnalité amine sur un copolymère d'alcool vinylique, ledit copolymère greffé de poly(alcool vinylique) contenant de 0,5 à 70 % en moles de monomère à fonctionnalité amine.

3. Composition de revêtement ayant une affinité pour l'encre selon la revendication 1 ou 2, dans laquelle le monomère éthyléniquement insaturé à fonctionnalité amine est choisi dans le groupe consistant en des allylamine, alkylèneamine, vinylpyridine, un méthacrylate de monoalkylaminoalkyle, un acrylate de monoalkylaminoalkyle, méthacrylate de 2-(diéthylamino)éthyle, un acrylate de dialkylaminoalkyle, un méthacrylate de trialkylammoniumalkyle, un acrylate de trialkylammoniumalkyle, un méthacrylamide de trialkylammoniumalkyle, un chlorure de diallyldialkylammonium, un acrylamide de trialkylammoniumalkyle et des combinaisons de ceux-ci.

4. Composition de revêtement ayant une affinité pour l'encre selon la revendication 1 ou 2, dans laquelle le monomère éthyléniquement insaturé à fonctionnalité amine est choisi dans l'ensemble constitué des méthacrylate de 2-(diméthylamino)éthyle, méthacrylate de 2-(diéthylamino)-éthyle, acrylate de 2-(diméthylamino)éthyle, acrylate de 3-(diméthylamino)-2,2-diméthylpropyle, acrylate de 2-(diéthylamino)éthyle, méthacrylate de 2-(tertiobutylamino)éthyle, chlorure de méthacrylate de 2-(triméthylammonium)éthyle, chlorure d'acrylate de 2-(triméthylammonium)éthyle, méthacrylamide de 3-(diméthylaminopropyle), chlorure de méthacrylamidopropyltriméthylammonium, chlorure de diallyldiméthylammonium, vinylpyridine, allylamine et des combinaisons de ceux-ci.

5. Composition de revêtement ayant une affinité pour l'encre selon la revendication 2, 3 ou 4, dans laquelle la masse moléculaire moyenne en poids du poly(alcool vinylique) est comprise entre 5000 et 300 000 et le degré d'hydrolyse du poly(alcool vinylique) est compris entre 70 et 100 % en moles.

6. Composition de revêtement ayant une affinité pour l'encre selon la revendication 2, 3 ou 4, dans laquelle la masse moléculaire moyenne en poids du poly(alcool vinylique) est comprise entre 15 000 et 200 000, le degré d'hydrolyse du poly(alcool vinylique) est compris entre 75 et 98 % en moles, et le copolymère greffé de poly(alcool vinylique) contient de 5 à 30 % en moles de monomère à fonctionnalité amine.

7. Composition de revêtement ayant une affinité pour l'encre selon l'une quelconque des revendications 1 à 6, comprenant un pigment, par exemple un pigment minéral.

8. Composition de revêtement ayant une affinité pour l'encre selon la revendication 7, dans laquelle le pigment est de la silice.

9. Composition de revêtement ayant une affinité pour l'encre selon l'une quelconque des revendications 1 à 8, dans laquelle ledit greffage est un greffage radicalaire.

10. Support récepteur d'encre comprenant un substrat revêtu d'une composition ayant une affinité pour l'encre, **caractérisé en ce que** la composition ayant une affinité pour l'encre est une composition de revêtement selon l'une quelconque des revendications 1 à 9.

11. Support récepteur d'encre selon la revendication 10, dans lequel le substrat est choisi dans l'ensemble consistant en papier, polyéthylène, polypropylène, un polyester, un polymère vinylique et un non-tissé.

12. Support récepteur d'encre selon la revendication 10 ou 11, qui est un papier couché pour enregistrement à jet d'encre, dans lequel ledit substrat est du papier et ladite composition de revêtement comprend un pigment minéral.

13. Support récepteur d'encre selon la revendication 12, dans lequel le pigment minéral est de la silice et le polymère ayant une pluralité de groupes hydroxyle latéraux est du poly(alcool vinylique).

14. Support récepteur d'encre selon la revendication 13, dans lequel le liant polymère est présent en une quantité, sur la base des solides, de 10 à 50 % en moles de la composition de revêtement, et la silice est présente en une quantité de 30 à 85 % en poids de la composition de revêtement.

15. Procédé de préparation d'un support récepteur d'encre, ledit procédé comprenant l'application d'un revêtement formé d'une composition aqueuse de revêtement ayant une affinité pour l'encre sur un substrat, **caractérisé en ce que** la composition de revêtement ayant une affinité pour l'encre est une composition de revêtement selon l'une quelconque des revendications 1 à 9.
